Europäisches Patentamt

European Patent Office

Office européen des brevets

(11) Numéro de publication : **0 451 077 A1**

## (12) DEMANDE DE BREVET EUROPEEN

(21) Numéro de dépôt : 91460020.0

(51) Int. Cl.⁵ : **B29C 41/06**

(22) Date de dépôt : 03.04.91

(30) Priorité : 04.04.90 FR 9004565

(43) Date de publication de la demande :
**09.10.91 Bulletin 91/41**

(84) Etats contractants désignés :
**AT BE CH DE DK ES GB GR IT LI LU NL SE**

(71) Demandeur : **S.A. ATELIERS POLYVALENTS
CHATEAUNEUF (APC)
Zone Artisanale Doslet, B.P. 11
F-35430 Chateauneuf d'Ille-et-Vilaine (FR)**

(72) Inventeur : **Juhere, Yannick Jules Jean
B.P.11
F-35430 Château d'Ille et Vilaine (FR)**

(74) Mandataire : **Le Guen, Louis François
CABINET Louis LE GUEN 38, rue Levavasseur
B.P. 91
F-35802 Dinard Cédex (FR)**

(54) **Four de rotomoulage.**

(57)    L'invention concerne un four de rotomoulage qui est utilisé pour mouler par rotation des pièces en matière plastique.

Il comprend des moyens pour faire tourner une moule ou un porte-moule pourvu de plusieurs moules autour d'un premier axe, des moyens pour les faire basculer autour d'un second axe horizontal perpendiculaire au premier axe et des moyens de chauffage pour chauffer lesdits moules à la température de moulage. Le moule ou le porte-moule (22) sont montés à l'intérieur d'une enceinte (1) sur laquelle sont montés lesdits moyens d'entrainement en rotation (15 à 21, 26, 27, 28, 29 à 32) et qui est entraînée par lesdits moyens de basculement (5 à 10, 11, 12), lesdits moyens de chauffage (33) chauffant l'intérieur de l'enceinte (1), ladite enceinte (1) étant pourvue de portes (34) par lesquelles les moules ou les porte-moules (22) sont amenés dans l'enceinte (1) ou sont sortis de ladite enceinte (1), les portes (34) étant fermées lors du moulage.

EP 0 451 077 A1

Jouve, 18, rue Saint-Denis, 75001 PARIS

FIG.2

L'invention concerne une four de rotomoulage qui est utilisé pour mouler par rotation des pièces en matière plastique, par exemple, en polyéthylène.

Le moulage par rotomoulage est une technique de moulage de pièces creuses en matière plastique. Elle consiste à introduire dans un moule une résine se présentant sous forme de poudre et à le faire tourner autour d'un premier axe et basculer alternativement dans un sens puis dans l'autre autour d'un second axe orthogonal au premier. Le moule est ensuite chauffé à une température qui permet à la poudre de résine de se gélifier et de se déposer sur la surface interne des parois du moule. Au bout d'un certain temps, l'ensemble de cette surface est recouverte par la résine. Après refroidissement, on obtient une pièce creuse aux parois d'épaisseur sensiblement constante.

On connaît déjà des machines de rotomoulage. Parmi les différents types de machine à mouler par rotation qui existent, on peut citer la machine simple qui comporte un cadre sensiblement rectangulaire prévu pour basculer de manière alternative autour d'un axe horizontal ainsi que, sur ce cadre, des moyens qui supportent le moule et le font tourner selon un axe orthogonal à l'axe de basculement du cadre. Le chauffage est effectué à l'air libre au moyen d'une rampe de brûleurs à gaz qui chauffent le moule dans sa partie inférieure du moment.

Cette machine présente l'avantage d'être très souple d'emploi. En effet, en combinant de manière appropriée le mouvement de rotation du moule et son mouvement de basculement, on peut réaliser des pièces dont toutes les parois n'ont pas la même épaisseur. Par exemple, en interrompant, dans une position donnée, le mouvement de basculement pendant un certain temps, on oblige la résine à s'accumuler plus à un certain endroit qu'à d'autres.

L'inconvénient qu'elle présente résulte du fait que le moule est chauffé seulement dans sa partie inférieure du moment. Par ailleurs, le chauffage se faisant à l'air libre, il y a des déperditions de chaleur assez importantes qui entraînent une consommation excessive d'énergie.

On peut citer également la machine à carroussel qui est constituée d'une colonne centrale qui porte, aux bouts de quatre bras à 90°, des mécanismes d'entraînement qui font tourner les moules selon deux axes orthogonaux entre eux. Il y a un moule par poste de travail. Par rotation de la colonne de 90°, un moule passe d'un poste de travail à un autre. Ces postes sont en général: un poste de chauffe, un poste de pré-refroidissement, un poste de refroidissement et un poste de chargement/déchargement. A chaque poste de travail, sauf le poste de chargement/déchargement, les moules sont enfermés dans des enceintes.

Des machines à trois postes à 120° existent également. Le poste de pré-refroidissement est alors supprimé.

La machine à carroussel présente l'avantage, sur la précédente, de maintenir le moule dans une atmosphère à température relativement homogène et évite ainsi qu'une partie du moule seule ne soit chauffée à la fois. Par ailleurs, les déperditions de chaleur sont, pour le poste de chauffe, inférieures à ce qu'elles sont dans une machine simple. Par contre, pour une pièce donnée, les temps de traitement à chaque poste peuvent être différents et cela oblige parfois à ne pas utiliser les trois ou quatres postes en même temps, mais un seul, ce qui diminue le rendement de la machine.

Le but de l'invention est de proposer un four de rotomoulage qui ne présente pas les inconvénients des machines mentionnées ci-dessus mais qui, par contre, en conserve leurs avantages.

A cet effet, un four de rotomoulage comprend des moyens pour faire tourner un moule ou un porte-moules pourvu de plusieurs moules autour d'un premier axe, de moyens pour les faire basculer autour d'un second axe horizontal perpendiculaire au premier axe et de moyens de chauffage pour chauffer lesdits moules à la température de moulage.

Selon une caractéristique de l'invention, le moule ou le porte-moule sont montés à l'intérieur d'une enceinte sur laquelle sont montés les moyens d'entraînement en rotation selon le premier axe et qui est entraînée par les moyens de basculement selon le second axe pour qu'elle entraîne le moule ou le porte-moule dans son mouvement de basculement, lesdits moyens de chauffage chauffant l'intérieur de l'enceinte, ladite enceinte étant pourvue de portes par lesquelles les moules ou les contre-moules sont amenés dans l'enceinte ou sortis de ladite enceinte, les portes étant fermées lors du moulage.

Les moules peuvent ainsi tourner selon un premier axe et basculer selon un second axe orthogonal au premier, comme dans le cas de la machine de rotomoulage simple. Un four selon l'invention présente de ce fait l'avantage d'être souple d'emploi. De plus, les moules étant enfermés dans l'enceinte où la température est relativement homogène, ils sont soumis à un chauffage uniformément réparti sur leur surface.

Selon une autre caractéristique de l'invention, l'enceinte est cylindrique d'axe principal horizontal et les moyens pour la faire basculer comprennent, sur la surface extérieure de sa demi-partie inférieure et de chaque côté, deux profilés en forme de "U" roulés en demi-cercle et fixés, par leur âme, sur ladite surface, chaque profilé recevant, entre ses ailes, un couple de roues coplanaires d'axes horizontaux et se trouvant être de part et d'autre du plan radial vertical de l'enceinte, les axes d'un couple se confondant avec les mêmes axes de l'autre couple, si bien que l'axe de basculement de l'enceinte se confond avec son axe principal, une roue au moins étant entraînée par un moteur pourvu de moyens de commande de son sens de rotation.

Les avantages que procurent cette caractéristique résident dans le fait que les moyens d'entrainement du basculement de l'enceinte sont indépendants d'elle, et en particulier de son diamètre. De plus, quel que soit ce diamètre, l'axe de basculement se confond toujours à l'axe principal de l'enceinte. On peut ainsi choisir, pour une fabrication donnée, une enceinte de diamètre convenant et la poser simplement sur le châssis. Le volume de l'enceinte étant toujours optimisé en fonction des pièces à fabriquer, il est possible de réaliser des économies de chauffage.

Selon une autre caractéristique de l'invention, les moyens pour faire tourner les moules ou les porte-moules selon le premier axe comprennent, deux tourillons coaxiaux espacés entre eux d'une distance légèrement inférieur au diamètre de l'enceinte et entre lesquels sont fixés un moule ou un porte-moule, et, montés sensiblement au milieu de génératrices appartenant à un même plan horizontal et à l'intérieur de l'enceinte, deux moyens de support symétriques l'un de l'autre par rapport au plan radial vertical de l'enceinte et comprenant deux roues coplanaires d'axe horizontal et perpendiculaire à l'axe principal de l'enceinte, une roue au moins d'un moyen de support étant entraînée par un moteur monté sur l'enceinte, chaque tourillon venant reposer sur les deux roues d'un moyen de support et étant en butée axialement, avec jeu, contre des moyens de butée prévus sur l'enceinte.

Selon une autre caractéristique de l'invention, les axes des roues sont dans un plan à une distance telle de l'axe principal de l'enceinte et les tourillons ont un diamètre tel que l'axe des tourillons est dans le plan radial horizontal de l'enceinte lorsque celle-ci n'est pas basculée.

Selon une autre caractéristique de l'invention, les moyens de butée comprennent une butée dont l'extrémité est constituée d'un plateau monté à rotation selon l'axe des tourillons sur la butée.

La pose ou la dépose des moules ou porte-moules de l'enceinte sont grandement facilitées puisqu'elles ne nécessitent aucun montage et démontage. Lorsque les moules ou les porte-moules sont entrain de tourner dans l'enceinte et que celle-ci bascule autour de son axe principal, ils sont entraînés axialement par le mouvemant de basculement et viennent en appui, alternativement, sur le plateau des moyens de butée d'un côté, puis sur le plateau de l'autre. Un jeu est nécessaire pour tenir compte des dilations des moules ou porte-moules. L'avantage de cette réalisation particulière des moyens d'entraînement en rotation des moules ou des porte-moules réside dans le fait que les moules ou porte-moules sont simplement posés sur les moyens de support.

Selon une autre caractéristique de l'invention, la demi-partie supérieure de l'enceinte est constituée de deux portes en quart de cylindre, chacune d'elle pouvant pivoter autour d'un axe situé sur la génératrice contenue, lorsque l'enceinte n'est pas basculée, dans le plan radial horizontal de l'enceinte.

L'intérieur de l'enceinte du four est donc accessible, lorsque ces portes sont ouvertes, par le dessus et l'enceinte peut être chargée ou déchargée au moyen d'un simple palan.

Selon une autre caractéristique de l'invention, les moyens de chauffage sont constitués d'un brûleur à gaz et l'enceinte est munie, dans sa partie supérieure, d'une cheminée d'extraction des gaz brûlés.

Selon une autre caractéristique de l'invention, les moyens de chauffage sont constitués d'éléments électriques radiants disposés dans l'enceinte au voisinage des ses parois.

Selon une autre caractéristique de l'invention, les moteurs sont pilotés par une unité de commande à programme commandant leur vitesse de rotation et le changement de sens de rotation du moteur et l'arrêt, dans des positions prédéterminées, du moteur de basculement.

Ainsi, selon les pièces à réaliser, il est possible de commander, grâce à des programmes pré-établis, le mouvement de basculement de l'enceinte et donc des moules. Cela permet de réaliser des surépaisseurs à certains endroits de la pièce en jouant sur l'écoulement de la poudre gélifiée. De même, la commande du moteur qui entraîne les moules ou contre-moules est réglée et stockée dans des programmes pré-établis en fonction des pièces à réaliser, de leur forme, de leurs dimensions, de leur épaisseur, mais aussi en fonction du matériau de moulage.

Les caractéristiques de l'invention mentionnées ci-dessus, ainsi que d'autres, apparaîtront clairement à la lecture de la description suivante d'un exemple de réalisation, ladite description étant faite en relation avec les dessins joints, parmi lesquels:

La Fig. 1 est une vue en élévation d'un four de rotomoulage selon l'invention, et

la Fig. 2 est une vue en coupe selon l'axe II/II de la Fig. 1, cette Fig. comportant un encart où sont représentés, en détail, des moyens de butée utilisés par l'invention.

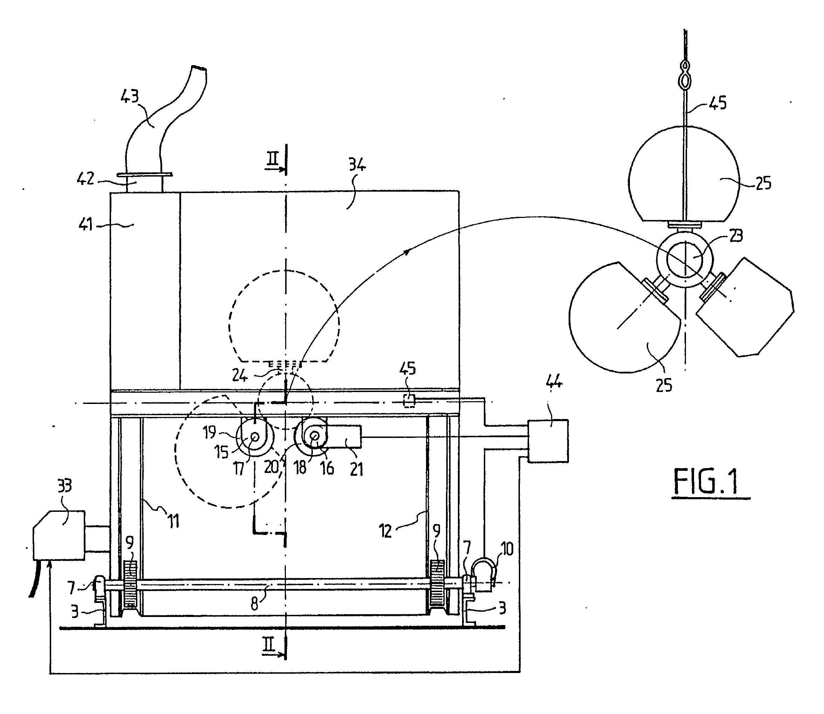

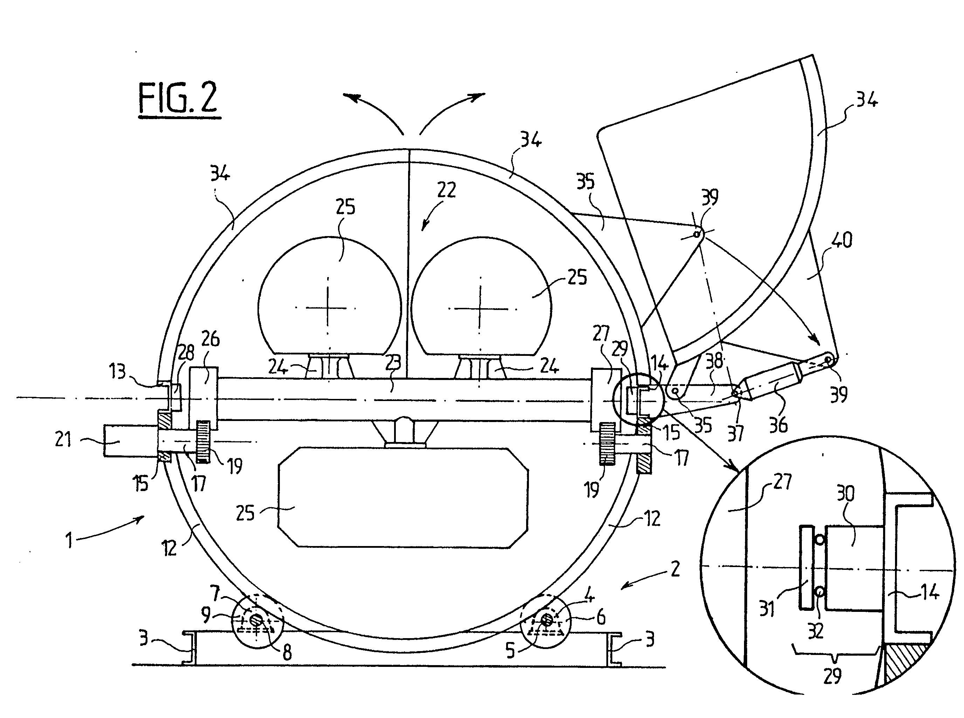

Le four représenté sur les Figs. 1 et 2 est essentiellement constitué d'une enceinte 1 et d'un support 2.

Le support 2 comprend un châssis rectangulaire formé de quatre profilés 3 en forme, de "U". Sur deux de ces profilés 3 qui sont opposés l'un de l'autre, sont respectivement montés des premiers paliers 4 dans lesquels tourne un premier arbre 5 pourvu de deux roues 6. Sur les mêmes profilés 3, à une certaine distance des premiers paliers 4, sont respectivement montés des seconds paliers 7 qui reçoivent un second arbre 8 muni de deux roues de friction 9. Le premier arbre 5 et le second arbre 8 sont parallèles entre eux et dans un plan horizontal. La roue 6 (ou 9) d'un côté sur un des arbres 5 (ou 8) est dans le même plan vertical que la roue du même côté 9 (ou 6) de l'autre arbre 8 (ou 5). Un bout de l'arbre 8 est solidaire de l'arbre d'entrainement d'un moteur 10 équipé d'un réducteur et monté sur le châssis 2.

L'enceinte 1 est cylindrique d'axe principal horizontal. Sur la surface externe d'une demi-partie de l'enceinte 1, sont fixés, par leur âme, deux profilés 11, 12 en forme de "U" et roulés en demi-cercle. Ils sont, chacun, dans un plan radial vertical et la distance qui les sépare est égale à celle qui sépare deux roues 6 ou 9 respectivement montées sur le même arbre 5 ou 8.

L'enceinte 1 est posée sur le support de manière que les roues 6 et 9 d'un même côté puissent rouler sur le fond du profilé 11 ou 12 du même côté. Lorsque les roues 6, 9 d'un même côté se trouvent être symétriques par rapport à un plan vertical de symétrie de l'enceinte 1, celle-ci est dite en position de repos sur lesdites roues 5, 9.

Le moteur 10 entraîne l'arbre 8 et les roues de friction 9 entraînent à leur tour l'enceinte 1. La commande du moteur est prévue pour que l'enceinte 1 soit animée d'un mouvement de rotation alternatif autour de son axe principal selon un angle inférieur à 45° de part et d'autre de sa position de repos.

Sur les deux génératrices de l'enceinte 1 qui appartiennent, lorsqu'elle est en position de repos, à un même plan radial horizontal, sont respectivement fixés, par leur âme, deux profilés 13, 14 en forme de "U". Sur l'aile inférieure de chacun des profilés 13, 14, sont montés, symétriquement de part et d'autre de son milieu, deux paliers 15, 16 supportant respectivement deux arbres 17, 18 dans un même plan horizontal et d'axes perpendiculaires à l'axe principal de l'enceinte 1. Les arbres 17, 18 traversent la paroi de l'enceinte 1 et, sur leur bout interne, sont montées des roues 19, 20 coplanaires. Chaque couple de roues 19, 20 est symétrique de l'autre par rapport à un plan vertical contenant l'axe principal de l'enceinte. Une des roues 19, 20 d'un couple est entraînée par un moteur 21 muni d'un réducteur.

On remarquera que les axes des roues 19, 20 ainsi que leur génératrices supérieures sont en dessous du niveau de l'axe principal de l'enceinte 1.

Reposant sur chacun des couples de roues 19, 20, on a représenté un porte-moule 22 constitué d'un arbre 23 sur lequel sont fixés, par des moyens de renvoi 24, des moules 25. L'arbre 23 est muni, à chacune de ses extrémités, de deux tourillons 26, 27 coaxiaux et espacés l'un de l'autre d'une distance sensiblement inférieur au diamètre de l'enceinte 1 et au moins égale à la distance qui sépare chaque couple de roues 19, 20. Au lieu d'un porte moule, on aurait pu placer un moule complet muni des deux mêmes tourillons 26, 27. Le diamètre des tourillons 26, 27 est prévu pour que, lorsqu'ils reposent sur les deux roues 19, 20 d'un même couple, l'axe de rotation du moule ou du porte-moule soit sensiblement dans un plan radial horizontal de l'enceinte 1.

Les moules ou porte-moules sont axialement en butée par des moyens de butée 28, 29 respectivement montés sur les profilés longitudinaux 13, 14. Le tourillon 26 vient en butée sur les moyens 28 et le tourillon 27 sur les moyens 29. Pour tenir compte des dilations longitudinales, des moules ou porte-moules, la distance qui sépare la face interne des moyens de butée est inférieure à la longueur totale des moules ou porte-moules. Ainsi, montés, ces derniers ont un jeu relativement important entre les moyens de butée.

Chaque moyen de butée 28, 29 est constitué d'une butée 30 fixée sur le profilé correspondant 13, 14 et d'un plateau 31 monté à rotation selon un axe parallèle à l'axe des tourillons sur la butée 30, et monté fixe axialement par des moyens 32 représentés schématiquement ici par des billes.

Une fois le porte-moule 22 ou le moule montés sur les quatres roues 19, 20, la roue 19 qui est entraînée en rotation par le moteur 21 entraîne à son tour le tourillon 26 correspondant et, par conséquent, le moule ou le porte-moule 22. Celui-ci effectue un mouvement complet de rotation autour d'un axe perpendiculaire à l'axe principal de l'enceinte 1 et donc perpendiculaire à l'axe de rotation alternative de l'enceinte 1.

Les moyens de butée 28, 29 reçoivent respectivement, alternativement en fonction de l'angle de basculement, les tourillons 26, 27. Ceux-ci ne reçoivent pas de résistance de la part des butées grâce aux plateaux 31 montés à rotation.

En communication avec l'intérieur de l'enceinte 1, on a prévu des moyens de chauffage 33, constitués, par exemple, d'un brûleur à gaz. Ils pourraient également être constitués d'éléments radiants montés dans l'enceinte au voisinage de ses parois ou de tout autres moyens équivalents.

La demi-partie supérieure de l'enceinte 1 est constituée de deux portes 34 en quart de cylindre (une seule est représentée sur la Fig. 2, l'autre étant symétrique par rapport au plan radial vertical de l'enceinte 1, celle-ci étant au repos). Chacune d'elles peut pivoter autour d'un axe 35 situé sur une génératrice de l'enceinte 1 appartenant au plan radial horizontal de l'enceinte 1. Elle est pourvue d'un vérin 36 à double effet, dont une première extrémité 37 est reliée, par l'intermédiaire d'une plaque 38, à l'enceinte 1 et dont l'autre extrémité 39 est reliée à une aile 40 solidaire de la porte 34.

Chaque porte 34 est moins large que l'enceinte 1. Dans la partie supérieure 41 de l'enceinte 1 qui est fixe, est prévue une cheminée 42 pour l'extraction des gaz brûlés issus du brûleur à gaz 33. La cheminée 42 est reliée à un système de ventilation (non représenté) au moyen d'une gaine souple 43 ou d'une gaine flexible en accordéon.

Les deux moteurs 10, 21 sont reliés à un organe de commande 44 qui permet le réglage de leur vitesse de rotation et, pour le moteur de basculement 10, l'amplitude du mouvement alternatif de l'enceinte 1 et, par exemple, la durée des arrêts en bout de course etc. Il est relié à une sonde de température 45 dans l'enceinte 1 et commande le fonctionnement des moyens de chauffage, en particulier, dans l'exemple de réalisation représenté, du brûleur 33. Il assure ainsi une régulation de la température à l'intérieur de l'enceinte 1. L'organe de commande 44 est, par exemple, piloté par un microprocesseur et, dans ce cas, il peut être programmable.

En fonctionnement normal, le moule (ou les moules 25) placé dans l'enceinte 1 est rempli d'une résine à mouler sous forme de poudre, par exemple, du polyéthylène. L'enceinte 1 est ensuite animée d'un double mouvement de rotation, une rotation complète autour d'un premier axe, généralement l'axe longitudinal du moule, et une rotation alternative autour d'un second axe orthogonal au premier. Les vitesses de rotation, l'amplitude et le séquencement de la rotation alternative sont réglés, au moyen de l'organe de commande 39, en fonction de la forme et des épaisseurs de la pièce à réaliser. Le brûleur 28 est mis en route et transmet sa chaleur à l'air ambiant de l'enceinte 1 et au moule. La résine se répand sur les parois du moule ou, pâteuse, elle y adhère. Au bout d'un certain temps, grâce au double mouvement de rotation, elle a complètement recouvert sa paroi interne.

Une fois sa paroi interne complètement recouverte, le moule est alors sorti du four dont les portes 29 ont été au préalable ouvertes. Il est ensuite transporté, au moyen d'un palan (schématisé ici par un câble 40) jusqu'au poste de refroidissement pendant qu'un autre moule rempli de poudre est amené dans l'enceinte 1 du four.

Le fonctionnement du four est le même si on utilise un porte-moule muni de plusieurs moules.

## Revendications

1) Four de rotomoulage comprenant des moyens pour faire tourner un moule ou un porte-moule pourvu de plusieurs moules autour d'un premier axe, des moyens pour les faire basculer autour d'un second axe horizontal perpendiculaire au premier axe et des moyens de chauffage pour chauffer lesdits moules à la température de moulage, caractérisé en ce que le moule ou le porte-moule (22) sont montés à l'intérieur d'une enceinte (1) sur laquelle sont montés les moyens d'entraînement en rotation selon le premier axe (15 à 21, 26, 27, 28, 29 à 32) et qui est entraînée par les moyens de basculement selon le second axe (5 à 10, 11, 12) pour qu'elle entraîne le moule ou le porte-moule (22) dans son mouvement de basculement, lesdits moyens de chauffage (33) chauffant l'intérieur de l'enceinte (1), ladite enceinte (1) étant pourvue de portes (34) par lesquelles les moules ou les porte-moules (22) sont amenés dans l'enceinte (1) ou sont sortis de ladite enceinte (1), les portes (34) étant fermées lors de l'opération de moulage.

2) Four de rotomoulage selon la revendication 1, caractérisé en ce que l'enceinte (1) est cylindrique d'axe principal horizontal et lesdits moyens de basculement comprennent, sur la surface extérieure de sa demi-partie inférieure et de chaque côté, deux profilés (11, 12) en forme de "U" roulés en demi-cercle et fixés, par leur âme, sur ladite surface, chaque profilé (11, 12) recevant, entre ses ailes, un couple de roues coplanaires (6, 9) d'axes horizontaux et se trouvant être de part et d'autre du plan radial vertical de l'enceinte (1), les axes d'un couple (6 ou 9) se confondant avec les mêmes axes de l'autre couple (9 ou 6), si bien que l'axe de basculement de l'enceinte (1) se confond avec son axe principal, une roue (9) au moins étant entraînée par un moteur (10) pourvu de moyens de commande (44) de son sens de rotation.

3) Four de rotomoulage selon la revendication 1 ou 2, caractérisé en ce que lesdits moyens de rotation des moules ou des porte-moules (22) selon le premier axe comprennent, deux tourillons coaxiaux (26, 27) espacés entre eux d'une distance légèrement inférieure au diamètre de l'enceinte (1) et entre lesquels sont fixés un moule ou un porte-moule (22), et, montés sensiblement au milieu de génératrices appartenant à un même plan horizontal et à l'intérieur de l'enceinte (1), deux moyens de support (15 à 19) symétriques l'un de l'autre par rapport au plan radial vertical de l'enceinte (1) et comprenant deux roues coplanaires (19, 20) d'axes horizontaux et perpendiculaires à l'axe principal de l'enceinte (1), une roue (20) au moins d'un moyen de support étant entraînée par un moteur (21) monté sur l'enceinte (1), chaque tourillon (26, 27) venant reposer sur les deux roues (19, 20) d'un moyen de support et étant axialement en butée, avec jeu, contre des moyens de butée (28, 29) prévus sur l'enceinte (1).

4) Four de rotomoulage selon la revendication 3, caractérisé en ce que les axes des roues (19, 20) sont dans un même plan à une distance telle de l'axe principal de l'enceinte (1) et les tourillons (26, 27) ont un diamètre tel que l'axe des tourillons est dans le plan radial horizontal de l'enceinte (1) lorsque celle-ci n'est pas basculée.

5) Four de rotomoulage selon la revendication 3 ou 4, caractérisé en ce que les moyens de butée (28, 29) comprennent une butée (30) dont l'extrémité est constituée d'un plateau (31) monté à rotation selon l'axe des tourillons (26, 27) sur la butée (32).

6) Four de rotomoulage selon une des revendications précédentes, caractérisé en ce que la demi-partie supérieure de l'enceinte (1) est constituée de deux portes (34) en quart de cylindre, chacune d'elle pouvant pivoter autour d'un axe (35) situé sur la génératrice contenue, lorsque l'enceinte (1) n'est pas basculée, dans le plan radial horizontal de l'enceinte (1).

7) Four de rotomoulage selon une des revendications précédentes, caractérisé en ce que les moyens de chauffage sont constitués d'un brûleur à gaz (33) et l'enceinte (1) est munie, dans sa partie supérieure, d'une cheminée (42) d'extraction des gaz brûlés.

8) Four de rotomoulage selon une des revendications précédentes, caractérisé en ce que les moyens de chauffage sont constitués d'éléments électriques radiants disposés dans l'enceinte (1) au voisinage des ses parois.

9) Four de rotomoulage selon une des revendications précédentes, caractérisé en ce que les moteurs (10, 21) sont pilotés par une unité de commande à programme (44) commandant leur vitesse de rotation et le changement de sens de rotation du moteur (21) et l'arrêt, dans des positions prédéterminées, du moteur de basculement (21).

FIG.1

FIG.2

Office européen
des brevets

**RAPPORT DE RECHERCHE EUROPEENNE**

Numero de la demande

EP 91 46 0020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 822 980  (GRAEPER) <br> * Résumé; fig. * | 1-9 | B 29 C  41/06 |
| A | FR-A-1 600 351  (VISTRON) <br> * Figure 1 * | 6 | |
| A | FR-A-1 331 884  (BOWATER) <br> * Résumé; fig. * | 1,3,7 | |
| A | FR-A-1 219 111  (BEYER-OLSON) <br> * Fig. * | 3,5 | |
| A | US-A-4 767 299  (FRIESEN) <br> * Colonne 2, ligne 65 - colonne 3, ligne 12; figure 1 * | 9 | |
| A | FR-A-2 625 132  (VIRONNEAU) <br> * Page 4, lignes 12-20; fig. * | 8 | |
| A | FR-A-2 185 492  (FUNABASHI) | | |
| A | EP-A-0 158 575  (DATOME) | | DOMAINES TECHNIQUES RECHERCHES (Int. Cl.5) |
| A | US-A-2 790 997  (KURTZ) | | B 29 C |

Le présent rapport a été établi pour toutes les revendications

| Lieu de la recherche | Date d'achèvement de la recherche | Examinateur |
|---|---|---|
| LA HAYE | 14-06-1991 | PEETERS S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)